# EUROPEAN PATENT APPLICATION

(11) **EP 1 342 491 A2**
(43) Date of publication of application: **10.09.2003**
(21) Application number: 03005073.6
(22) Date of filing: 06.03.2003
(51) Int. Cl.: A63F 13/12

(54) **Dynamic games system for digital interactive television**

(30) Priority: 07.03.2002 US 362062 P
(71) Applicant: Pixel Software Technologies Ltd., Tel Aviv 69710 (IL)
(72) Inventor: Weitz, Ramy, Savion 56536 (IL)
(74) Representative: Becker Kurig Straus

(57) **Abstract**

A generic cross-broadcast system for providing games on interactive television networks comprises an administration machine, a cross-broadcast real-time upload means operative to interact with said administration machine and to provide continuous real-time updating to a plurality of carousel servers residing in one or more headends, a generic game server used for managing on-going online games, and a database server for keeping game related information. The cross-broadcast real-time upload means renders the operation or choice of a particular carousel server transparent to an operator of the system or to a programmer of the game server application.

## Description

### FIELD AND BACKGROUND OF THE INVENTION

The present invention relates to interactive games played over television networks, in particular Digital Interactive Television (DIT) networks. DIT is different from the traditional television mainly in two aspects: 1) the broadcast format (digital vs. analog), which allows broadcasting applications and data in addition to the traditional video and sound broadcast, and 2) the set-top box (the machine that receives the broadcast signal from the cable/satellite dish, decodes it and sends it to the television), which is in fact a computer. The set-top box includes the main elements of a computer, i.e. a central processing unit (CPU), memory, and a graphics chip, and it can execute applications.

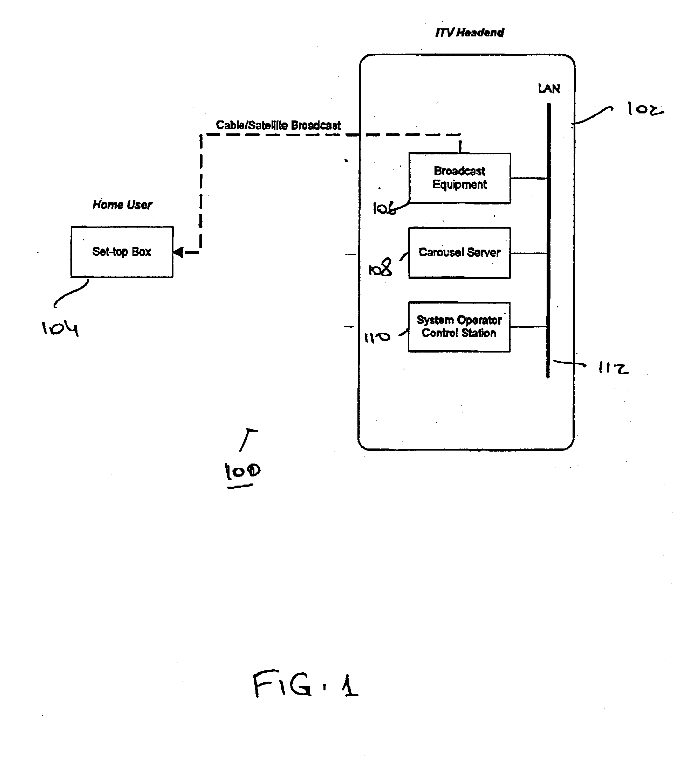

The ability to broadcast applications and execute them on the set-top box creates the "interactiveness" of DIT, because the user (now more than simply a viewer) can control the flow of the application that is running on the set-top box. In fact, this DIT application is very similar to a PC application that is loaded off the hard drive and controlled by the user. However, unlike a PC, the set-top box can only load applications from the broadcasting center (which is called a 'headend') through the broadcast stream. The mechanism that is responsible for uploading applications and data from the headend to the set-top box is called a Carousel Server. The carousel server holds all the applications and data that the network operator is offering to its subscribers, and sends them to the broadcasting device in an endless loop (thus the name 'carousel'). FIG. 1 shows a diagram of a typical Interactive TV (ITV) network setup **100**, comprised of an ITV headend **102** broadcasting by cable or satellite to a set-top box **104**. Headend **102** includes broadcast equipment **106**, one or more carousel servers **108**, and a system operator control station **110**, all connected by a local area network (LAN) **112**.

Broadcast updates are done via the carousel server and there are tools for updating carousel servers (typically each type of carousel server has its own unique tool). However, existing carousel updating tools are not designed for real time updates - they usually require manual operation, the operating procedures are different for each type of carousel server, and they are cumbersome to operate. In addition, they are typically designed for low frequency updates (once a day/week/month).

Most ITV multiplayer games are turn-based (where each player takes his/her turn, and then waits for the other players to complete their turn - the players are not playing against each other concurrently). Current implementations require a different game server application to handle each game, because different games have different playing rules and different algorithms for emulating a player (when playing against the computer). That makes the process of adding new games much more complicated, because each game needs to create the 'generic' parts of the server application (such as "lobby", "matchmaking" and "messaging") from scratch, while ideally one system could perform all those generic parts, thus significantly reducing the effort of creating new games.

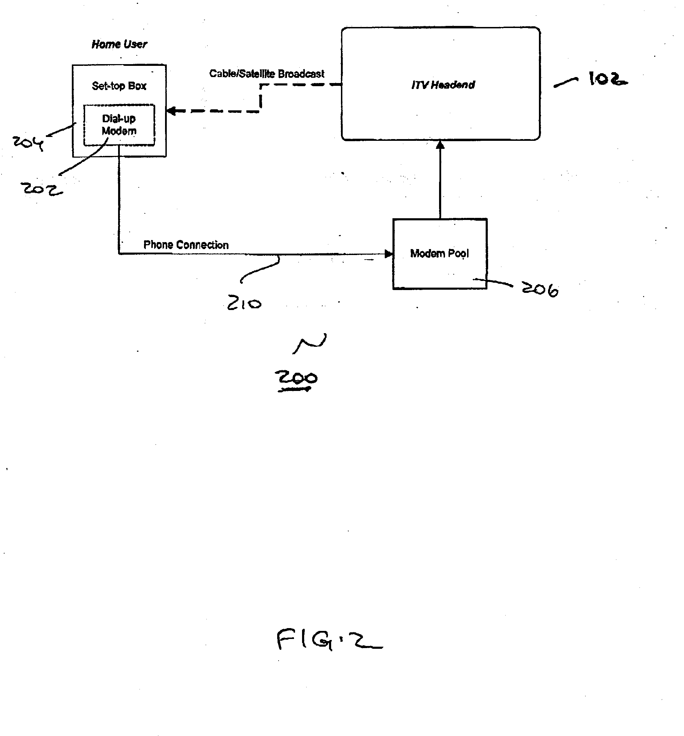

The ITV system described above can transfer video, data and applications from the headend to the set-top box. However, for the set-top box to send data to the headend, another mechanism, called 'back channel' is required. A back channel can be implemented in several ways, depending on the network type, and regardless of type allows the set-top box to interact (exchange data) with servers at the headend. FIG. 2 shows a diagram describing a modem-based back channel implementation. A system **200** with a "dial-up" back channel includes a dial-up modem **202** residing in a set-top box **204** belonging to a home user. Modem **202** is used for dialing to, and transferring data to and from headend **102**. System **200** further includes a modem pool **206** for receiving calls from, and transferring information to/from dial-up modems. Dial-up modem **202** and modem pool **206** are always connected by a phone connection **210**. The existence of a back channel subsystem in an ITV network permits use of applications that are otherwise impossible - client-server applications and multiplayer games (where users play games against each other). At present, there are two typical types of back channels in use: dial-up (as in FIG. 2), which is typically being used in satellite networks; and DVB-RC (Digital Video Broadcasting - Return Channel) which is being used by the cable companies and consists of a full duplex cable communication (i.e. the broadband connection that broadcasts data from the headend to the set-top box is also being used to send data from the set-top box to the headend).

As online applications on ITV evolve, and become more popular as mainstream entertainment in many countries, there is a widely recognized need for, and it would be highly advantageous to have, a system that is able to use legacy headend and set-top box modules (that were designed to perform only TV programming related tasks) in order to have real-time online communication between the application running on the set-top box (e.g. a game) and the headend.

### SUMMARY OF THE INVENTION

The present invention is of a system for providing games on ITV networks. The present invention discloses an innovative system that enables, in an ITV system for on-line gaming, to work with many carousel servers in a unified way (as opposed to many of the ITV game developers that work with a single broadcaster, hence one carousel server).

According to the present invention there is provided a generic cross-broadcast system for providing games on interactive television networks that includes at least one headend in communication with a plurality of set-top boxes, comprising an administration machine for setting up different parameters and for loading content to a broadcast network, a cross-broadcast real-time upload means operative to interact with the administration machine and with at least one carousel server residing in the at least one headend, and a database server for keeping game related information, the administration machine, cross-broadcast real-time upload means and database server connected through a local area network, whereby the system can provide continuous real-time updating to the at least one carousel server.

According the present invention, the generic cross-broadcast system further comprises a generic game server for managing on-going online games, the generic games server connected to the administration machine, the cross-broadcast real-time upload means, and the database server by the local area network.

According to the present invention there is provided a method for providing cross-broadcast real-time updates from a single source to a plurality of carousel servers, comprising the steps of providing a cross-broadcast real-time upload means operative to interact with the single source and the plurality of carousel servers, receiving real-time updates from the single source, and using the cross-broadcast real-time upload means to choose at least one of the carousel servers and to upload the real-time updates to the chosen carousel server(s), whereby the upload operation and the choice of the carousel server(s) is transparent to the single source.

According to the present invention there is provided a dynamic games system for digital interactive television, comprising an administration machine, cross-broadcast real-time upload means operative to interact with the administration machine and with a plurality of carousel servers residing in a plurality of headends, a generic games server operative to manage on-going online games, and a database server for keeping game results, statistics, and other information that can be used for billing purposes, the administration machine, cross-broadcast real-time upload means, generic games server and database server connected by a local area network, whereby said cross-broadcast real-time upload means enables reception of input from a single source and interaction with multiple different carousel servers for real-time updating of said servers, and whereby said generic games server facilitates the running of multiple games on a single game server application.

### BRIEF DESCRIPTION OF THE DRAWINGS

The invention is herein described, by way of example only, with reference to the accompanying drawings, wherein:
FIG. 1 shows a diagram of a typical ITV network setup;
FIG. 2 shows a diagram describing a prior art modem-based back channel implementation.
FIG. 3 shows a diagram of a preferred embodiment of the system of the present invention and its integration in an ITV network;
FIG. 4 shows a diagram of the Cross-Broadcast Real-time Upload Means system components;
FIG. 5 is an exemplary flowchart describing the flow of a manual information updating process by the operator of the system of the present invention;
FIG. 6 is an exemplary flowchart describing the flow of an automatic information updating process by a game server application;
FIG. 7 is a diagram describing the components of the GGS application with its Extension Dynamic Link Libraries (DLLs);

### DESCRIPTION OF THE PREFERRED EMBODIMENTS

The present invention is of a system for providing games on Interactive Television networks. The system (referred to hereafter as the "Jive" system) includes two innovative elements: a "Cross-Broadcast Real-Time Upload" (CBRTU) means and a "Generic Game Server (GGS) for Turn-Based Games" element. The innovative system and its features are described in more detail below. The Jive system handles all the aspects of delivering and managing single-player and multiplayer games over digital ITV networks. Jive can operate on networks with or without a return path. In the latter case, Jive offers only offline applications (e.g. games played against the computer and not against other remote players).

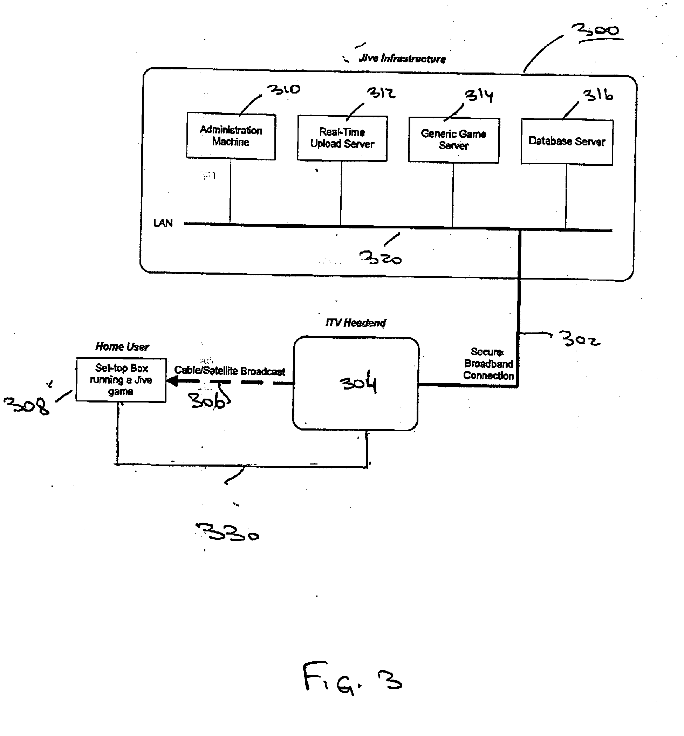

FIG. 3 shows a diagram of a preferred embodiment of the system of the present invention and its integration in an ITV network. The figure shows a Jive system **300** connected via a secure broadband connection **302** to an ITV headend **304**, which in turn has a cable/satellite broadcast communication link **306** with a home user. The home user has a set-top box **308** that can run a Jive game. System **300** includes an administration machine **310** for setting up different Jive parameters and for loading content (e.g. by typing text in the Ticker example described below). System **300** further includes a CBRTU means **312**, which is the software that interacts with the carousel server in order to upload content to it. System **300** further includes a GGS **314** for managing on-going online games played by the home users through the Jive system, and a database server **316** for keeping game results, statistics, and other information that can be used for billing purposes. Elements **310** - **316** of system **300** are in communication (among themselves) through a LAN **320**. A back channel **330** connects between set-top box **308** and headend **304**.

As a generic system, Jive is an infrastructure for supporting online games and other entertainment applications such as the Ticker and Live Quizzes explained below "Ticker" is a system that scrolls on-going information in the menu, or inside a game. This information is constantly updated by the Jive human operator, and includes announcements on events, winners, new games, etc. "Live Quizzes" are games where all participants get a question at the same time and are required to solve it as fast as they can. The information in this case is created automatically by the Quiz game server application.

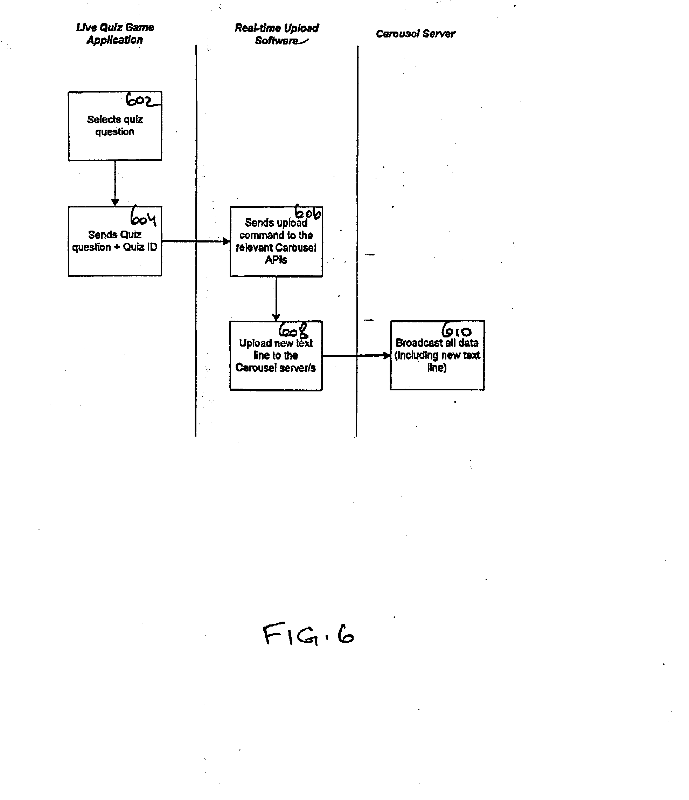

The different game and entertainment applications (such as the Quiz game server application, see description of FIG. 6 below) can reside anywhere, as long as they can interact with the Jive system through a secure Internet connection. One of the Jive features is real-time update of information to the players via broadcast. This information update is required in several cases, for example for the Ticker and Live Quizzes applications above.

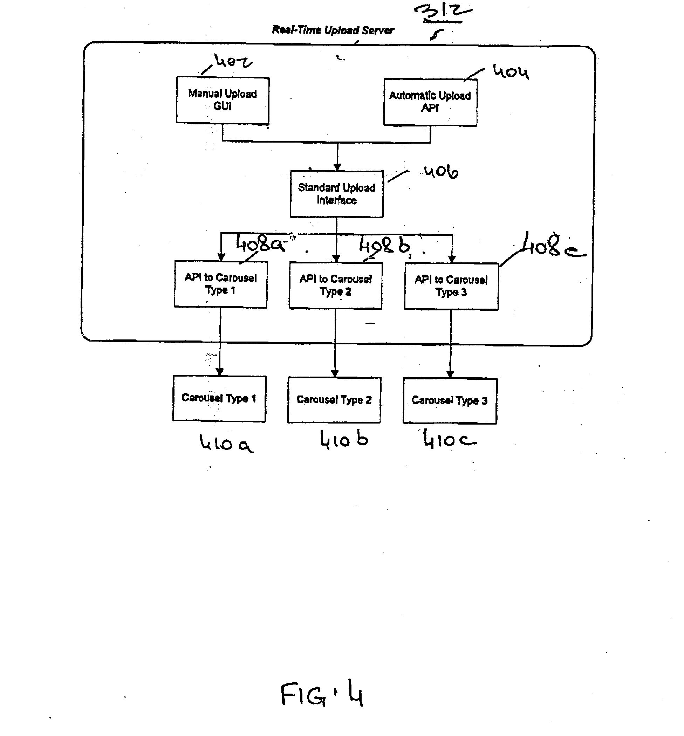

FIG. 4 shows CBRTU **312** in more detail. CBRTU **312** is a means for continuous real-time updating of data to each of the plurality of carousel servers. It is designed to solve the problems of non-real time update and low frequency, and allow for continuous manual and/or automatic updates of data. CBRTU **312** is built as a layer above the carousel servers - it receives information updates from the operator (in case of Ticker), or from generic game server **314** in FIG. 3 (in case of Live Quizzes), and interacts with the carousel server for uploading the information. The operation (and even choice) of a certain carousel server is transparent to the Jive operator or to the programmer of the game server application. CBRTU **312** includes a manual upload GUI (Graphic User Interface) **402** for entering information updates manually, and an automatic upload API (Application Program Interface) **404** for allowing game applications to interact with the CBTRU for automatic information updates. Both GUI **402** and API **404** communicate through a standard upload interface (SUI) **406** and API-to-Carousel modules **408a-c** with a plurality of carousels **410 a-c** (of which 3 are shown for illustration only) of different types. A generic ('cross-broadcast') system as described herein is non-obvious to implement because on one hand it provides a single interface for information updates (e.g. interface **406**) for all the applications requiring such updates (e.g. game applications), while on the other hand it can interact with different carousel servers, each with its own interface. The API-to-Carousel module is the component that converts the information received by the updating application (e.g. a game application) to the specific format of the specific carousel server, and sends it to that carousel server. Each carousel server that Jive supports requires a separate API-to-Carousel module.

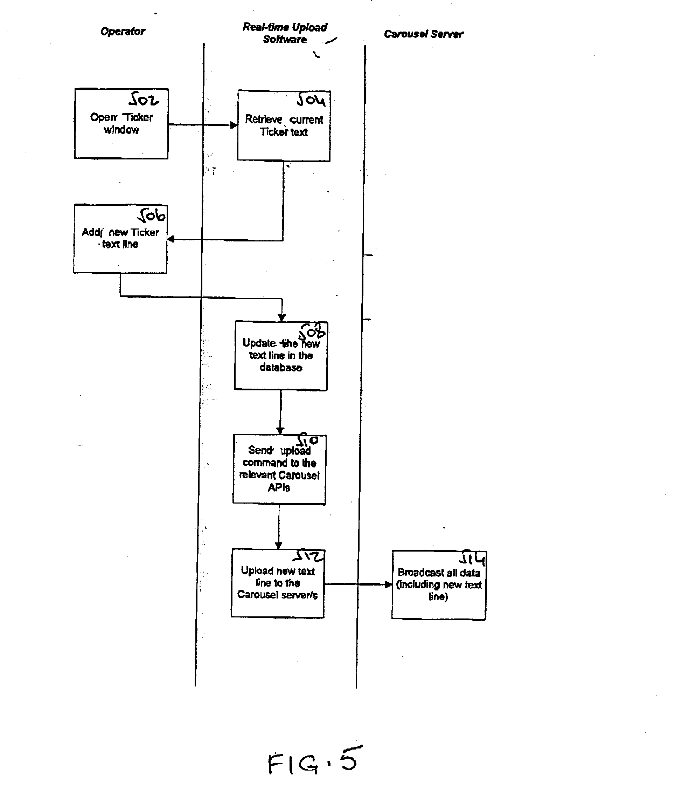

FIG. 5 is an exemplary flowchart describing the flow of a manual information updating process by a Jive operator. In a typical process, the operator opens a Manual Update application in the Jive administration machine in a step **502**. For example, the two operator steps in FIG. 5 ('opens ticker window' and 'adds new Ticker text line') are done via the Manual Update application. Once initiated, the application retrieves the current ticker text in a step **504**, and displays it to the operator. The application also displays an empty editable text field. The operator then enters the text to the editable field in a step **506**. Once entered, the new text is stored in the database (as are all the text strings from previous updates) in a step **508**. A text update command including the new text is then sent to the relevant carousel server API in a step **510**. The carousel server API then calls the appropriate update command on the carousel server it is connected to in a step **512**, and the carousel server uploads the new text to the broadcast stream in a step **514**. Step **514** is novel in the sense that the system enables reception of input from one source (CBRTU **312**, more specifically through single standard upload interface **406**) and interaction with multiple different carousel servers for real-time updating.

FIG. 6 is an exemplary flowchart describing the flow of an automatic information updating process by a game server application. In a typical process, the game application (a Live Quiz, in this example) randomly selects a question from its database of questions in a step **602**. The application then calls the Real-Time Upload Application update command, and sends the quiz ID and the question text as parameters in a step **604**. The text update command including the new text is sent to the relevant carousel server API in a step **606**. The carousel server API then calls the appropriate update command on the carousel server it is connected to in a step **608**, and the carousel server uploads the new text to the broadcast stream in a step **610**. As in FIG. 5 above, step **610** is novel in the sense that the system enables reception of input from one source (CBRTU **312**, more specifically through single standard upload interface **406**) and interaction with multiple different carousel servers for real-time updating.

As mentioned, the second innovative element of the system of the present invention is the Generic Game Server (**314** in FIG. 3) for Turn-Based Games. Most ITV multiplayer games are turn-based (where each player players his/her turn and then waits for the other players to complete their turn, i.e. the players are not playing against each other concurrently). Current implementations require a different game server application to handle each game, because different games have different playing rules and different algorithms for emulating a player (when playing against the computer). That makes the process of adding new games much more complicated, because each game needs to create the 'generic' parts of the server application (such as "lobby", "matchmaking" and "messaging") from scratch for that game, while ideally one system could perform all those generic parts, thus significantly reducing the effort of creating new games. GGS **314** was created for handing all these turn-based games using a single game server application. The GGS is designed to allow the flexibility of running multiple games on a single game server application (and easily adding new games without modifying GGS), by using an open architecture that allows adding more games to the same game server application. The mechanism used for adding games to the 'open' game server is called an Extension DLL (Dynamic Link Library). The DLL is a technology for writing different parts of applications separately and combining them together at the execution stage, rather than at the compile stage as done with a traditional application. DLLs are known in the art, but are used herein in an innovative way for describing the game-specific game logic, while the main application is the generic games manager.

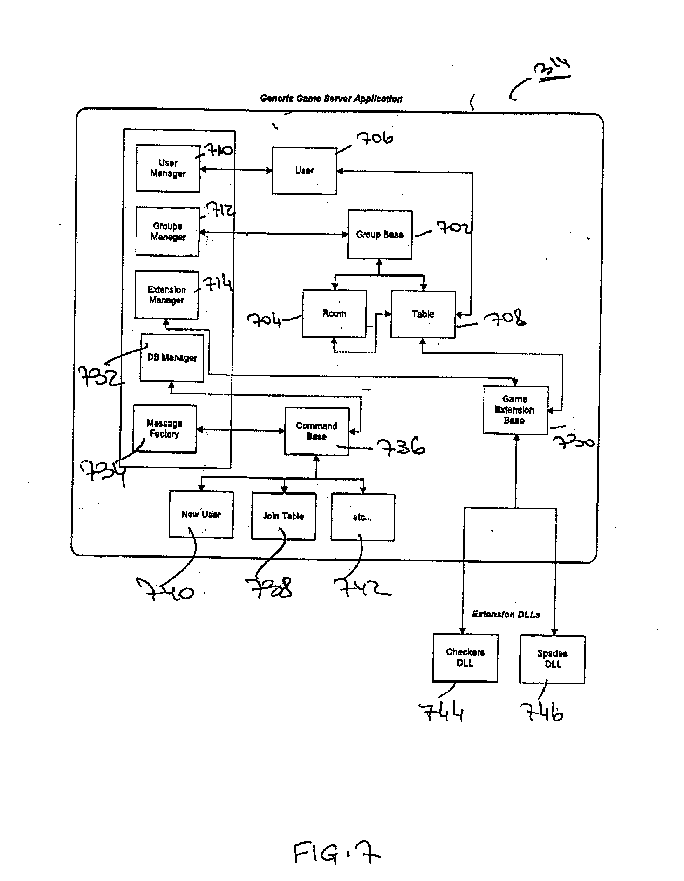

FIG. 7 is a diagram describing the components of the GGS application with some exemplary Extension DLLs. GGS **314** includes a Group Base **702**, which is the base class for all the group entities in the application. There are two group entities or "classes": Tables and Rooms. Each group has a unique Group ID. The Group Base **702** class, along with the Room and Table classes below, are part of the unified management of a turn-based games lobby (where the matchmaking between players is taking place). GGS **314** further includes a Room **704**, which is a subclass of Group Base **702**. GGS **314** further includes a User **706**, i.e. each player connected to the server is represented as a User Entity, identified by a unique ID. GGS **314** further includes a Table 708, which is a container of Users. A table has a predefined number of chairs (taken from the Extension DLL of the specific game that is using the lobby). GGS **314** further includes a Users Manager class **710** that is responsible for keeping track of all the online users, regardless of their current gaming activities. Users Manager collects and stores usage statistics for players. GGS **314** further includes a Groups Manager **712** that is responsible for keeping track of all the available groups. One of its key features is to keep a list of all the Rooms. This structure enables the building of a tree of groups with unlimited depth. Since the GGS can support any number of games, a tree of groups needs to be kept for each game type. GGS **314** further includes an Extension Manager **714**, which is a class that adds the specific game extension functionality to the generic game management process by acting as a mediator between the groups (via the Groups Manager class) and the Game Extension Base class (see below). Each extension is implemented in a DLL. Functionality can be added to the server by just placing an Extension DLL in the correct folder. GGS **314** further includes a Game Extension Base **730**, which is a class that functions as a wrapper of Extension DLLs, and offers a unified interface through which the Groups Manager and Extension Manager classes interact with the Extension DLLs. GGS **314** further includes a DB Manager **732**, which is a module that manages all the pieces of data that the system needs to contain in order to support online gaming. Examples of such information would be user IDs, number of tables for each game, number of players per table for each game, which player is at which table, the status of each player in each game (e.g. how many points he/she has), etc. The DB Manager can receive commands for storing this information or queries to retrieve this information. GGS **314** further includes a Message Factory **734**, which is the 'switchboard' component of the system - every action that the user creates while playing a game is eventually translated into a message that is generated in the system for the purpose of executing the action that the user requested. For example, if the user is in the game lobby and in the process of selecting a player to play against (by selecting a table to join), then when he/she hits the table number key, the Message Factory will receive this input and generate a Join Table command **738** by generating an appropriate request to a Command Base **736**. Command Base **736** is the container class (a programming term that defines a piece of code that is used for containing and managing other pieces of code of a certain type). In this case, Command Base **736** contains all the different commands available in the system (e.g. New User **740** and Join Table **738**) and manages them (i.e. calling a specific command according to requests it receives from the Message Factory). "New User", "Join Table" and "etc." **742** are examples of generic online gaming actions that the GGS supports. Each online turn-based game requires a "New User" action because when a player logs into the system he/she is being registered by the "New User" action. When a player wants to choose someone else to play with (say a game of Chess, which is a 2-player game), he/she will select a virtual Chess table (which because of the nature of Chess will have only two chairs) and will therefore trigger a "Join Table" action (which will happen even if he/she is the first one in this table, e.g. joining an empty table). Finally, "Checkers DLL" **744** and "Spades DLL" **746** are examples of an Extension DLL. In essence, Spades DLL is the piece of software that contains the logic of the game "Spades", which is the game specific module in the game server.

An Extension DLL can perform any kind of game-specific task. For example, it can be a 'brain' (a DLL that emulates a player in the game, so that the human player can play against the computer). Another example is 'Save Game' functionality - saving the game status at a specific time (according to player request) so that it can be loaded and played from the same point at a later time (which is especially useful in long games such as Chess). The Extension DLL, by itself, is not responsible for adding the ability to execute an additional game on the server. The GGS itself is designed in such a way that it handles all turn-based games without the need for specific game-related programming (which is done via the Extension DLL). The GGS includes the Lobby mechanism, which does the matchmaking between players and the message transfers between two game clients (that are running on the set-top box) during the game.

The use of the Extension DLL is necessary in cases where an additional game functionality is required, and where this functionality is not handled by the GGS itself (without the DLLs). The most common examples are an AI (Artificial Intelligence, a 'server player' that emulates a real player) and a 'Save/Load Game' that stores and retrieves game specific data on the server so that a game can be stopped and later resumed from the same point.

The playing rules are implemented in the game clients (the set-top box applications) and are transparent to the GGS. However, in the case where a DLL is provided that performs as an AI player for a certain game, this DLL needs to know the game rules in order to 'play it'. A significant advantage of the system of the present invention is that whenever an AI or special functionality (such as Save Game) is not required, which is quite common, no change is required in the generic game server for adding a new game. In the traditional architecture it is necessary to change the server each time a game is added, even if most of the work is done by the game client applications.

Extension DLLs, according to the present invention, are designed and created using the GGS Extension DLL API (Game Extension Base module **730** in FIG. 7, which functions as the interface between Jive and the DLLs). The API must be used by all Extension DLLs in order to interact with the generic game server. The API is designed in such a way that the Extension DLL can perform any special game feature. To achieve this, the API includes functions for receiving and submitting all game related data. In addition, the update functions of the DLL are called during every game cycle, so that the DLL can be involved at any stage of the game (which is required, for example, by the AI DLLs). The novel use of Extension DLLs in the present invention advantageously provides great flexibility: in the system of the present invention the main application is the software that manages the games, and the logic of each game is contained in a DLL. Therefore, the main application can be created without knowing all the games that it will manage, while those games can be added later.

While the invention has been described with respect to a limited number of embodiments, it will be appreciated that many variations, modifications and other applications of the invention may be made.

## Claims

1. A generic cross-broadcast system for providing games on interactive television networks that includes at least one headend in communication with a plurality of set-top boxes, comprising:
a. an administration machine for setting up different parameters and for loading content to a broadcast network;
b. cross-broadcast real-time upload means operative to interact with said administration machine and with at least one carousel server residing in the at least one headend, and
c. a database server for keeping game related information, said administration machine, cross-broadcast real-time upload means and database server connected through a local area network, whereby the system can provide continuous real-time updating to said at least one carousel server.

2. The system of claim 1, further comprising a generic game server for managing on-going online games, said generic games server connected to each of said administration machine, said cross-broadcast real-time upload means, and said database server by said local area network.

3. The system of claim 2, wherein said cross-broadcast real-time upload means operativeness to interact with at least one carousel server includes a transparent configuration mediating between an operator and said at least one carousel server.

4. The system of claim 2, wherein said cross-broadcast real-time upload means operativeness to interact with at least one carousel server includes a transparent configuration mediating between said generic game server and said at least one carousel server.

5. The system of claim 3, wherein said transparent configuration is facilitated by a manual upload graphic user interface included in said cross-broadcast real-time upload means.

6. The system of claim 5, wherein said cross-broadcast real-time upload means further includes a standard upload interface and an application program interface-to-carousel module, and wherein said facilitation is enabled by said manual upload graphic user interface communicating with said at least one carousel server through said standard upload interface and said application program interface-to-carousel module.

7. The system of claim 4, wherein said transparent configuration is facilitated by an automatic upload application program interface included in said cross-broadcast real-time upload means.

8. The system of claim 7, wherein said cross-broadcast real-time upload means further includes a standard upload interface and an application program interface -to-carousel module, and wherein said facilitation is enabled by said automatic upload application program interface communicating with said at least one carousel server through said standard upload interface and said application program interface-to-carousel module.

9. The system of claim 2, wherein said generic game server includes a plurality of extension dynamic link libraries and is operative to run all games on said broadcast network using a single game server application, whereby said extension dynamic link libraries facilitate addition of new games running on same said application.

10. A method for providing cross-broadcast real-time updates from a single source to a plurality of carousel servers, comprising the steps of:
a providing a cross-broadcast real-time upload means operative to interact with the single source and the plurality of carousel servers;
b. receiving real-time updates from the single source; and
c. using said cross-broadcast real-time upload means to choose at least one of the carousel servers and to upload said real-time updates to said at least one o carousel server, whereby said upload operation and said choice of said at least one carousel server is transparent to the single source.

11. The method of claim 10, wherein said single source is selected from the group consisting of an operator and a generic game server.

12. The method of claim 10, wherein said uploading of said updates using said cross-broadcast real-time upload means includes uploading said updates through a single interface.

13. The method of claim 12, wherein said uploading through a single interface further includes connecting said interface to a separate API-to-carousel module for each server of said plurality.

14. A dynamic games system for digital interactive television, comprising:
a. an administration machine;
b. cross-broadcast real-time upload means operative to interact with said administration machine and with a plurality of carousel servers residing in a plurality of headends;
c. a generic games server operative to manage on-going online games; and
d. a database server for keeping game results, statistics, and other information that can be used for billing purposes, said administration machine, cross-broadcast real-time upload means, generic games server and database server connected by a local area network,
whereby said cross-broadcast real-time upload means enables reception of input from a single source and interaction with multiple different carousel servers for real-time updating of said servers, and whereby said generic games server facilitates the running of multiple games on a single game server application.

15. The system of claim 14, wherein said cross-broadcast real-time upload means includes a single standard upload interface connected to a plurality of API-to-carousel modules, and wherein said operativeness to interact with a plurality of carousel servers includes cross-broadcasting information from said single source to said plurality of carousel servers through said single standard upload interface and said API-to-carousel modules.

16. The system of claim 15, wherein said single source is an operator, and wherein said information includes manual updates input through a manual upload graphic user interface included in said cross-broadcast real-time upload means.

17. The system of claim 15, wherein said single source is said generic game server, and wherein said information includes automatic updates input through an automatic upload application program interface included in said cross-broadcast real-time upload means.
